# EUROPEAN PATENT APPLICATION

(11) **EP 4 432 391 A1**
(43) Date of publication of application: **18.09.2024**
(21) Application number: 23746394.8
(22) Date of filing: 28.01.2023
(51) Int. Cl.: H01M 4/136, H01M 4/1397, H01M 4/04, H01M 10/0525

(54) **POSITIVE ELECTRODE SHEET FOR HIGH-RATE, LONG-CYCLE AND HIGH-SAFETY LITHIUM BATTERY, PREPARATION METHOD THEREFOR AND APPLICATION THEREOF**

(30) Priority: 30.01.2022 CN 202210113785
(71) Applicant: Beijing WeLion New Energy Technology Co., Ltd, Beijing 102402 (CN)
(72) Inventor: QIU, Jiliang, Beijing 102402 (CN); YANG, Qi, Beijing 102402 (CN); ZU, Chenxi, Beijing 102402 (CN); YU, Huigen, Beijing 102402 (CN)
(74) Representative: SSM Sandmair
(86) International application number: PCT/CN2023/073562
(87) International publication number: WO 2023/143517

(57) **Abstract**

A positive electrode sheet for a lithium battery and a preparation method therefor. The positive electrode sheet comprises a positive electrode material layer and a functional layer (3) directly located on the positive electrode material layer. The material of the functional layer comprises a component 1 that is selected from at least one of Li₁₋ₓ₁Ti₁₋ₓ₁Aₓ₁OPO₄, Li₁₋ₓ₁T1₁₋ₓ₁Aₓ₁PO₅, Li_{2-y1}Ti_{1-y1}A_{y1}OM1O₄, and Li_{2-y1}Ti_{1-y1}A_{y1}M1O₅, wherein 0≤x1≤0.7, 0≤y1≤1, A is selected from at least one of Nb, Ta and Sb, and M1 is selected from at least one of Si and Ge. The material of the functional layer further comprises a component 2 that is selected from at least one of LiM2₂(PO₄)₃, Li₁₊ₓ₂Alₓ₂M2₂₋ₓ₂(PO₄)₃, M2O₂, Li_{16-4y2}M2_{y2}O₈, M2P₂O₇, M3PO₄, M3₂SiO₅, M4₃(PO₄)₂, M4₂SiO₄, M2 is selected from one of Ti, Ge, Zr and Hf, wherein 0<x2<0.6, and M3 and M4 are respectively selected from one of Al, Ga, Sc, Y, Ca, Sr, Zn, Si, In, Lu, La, Fe, Cr and Ge, and 3<y2<4. The component 1 or a mixed component of the component 1 and the component 2 is added to the positive electrode sheet by coating the surface of the positive electrode material layer. The lithium battery containing the positive electrode sheet shows excellent rate capability, cycle performance and safety performance.

## Description

### FIELD

The present disclosure relates to the technical field of lithium battery, in particular to a positive electrode sheet for high-rate, long-cycle, and high-safety lithium battery, and preparation method therefor and application thereof.

### BACKGROUND

The lithium-ion battery has advantages such as high energy density, desirable cycle performance, long service life, low self-discharge, and no memory effect, it has gradually occupied a larger application market in the aspects of energy storage, power battery, and 3C electronics, thus it exhibits a widespread prospect.

Lithium batteries have been continuously developed in the direction of improving energy density, to provide better endurance for electric vehicles, digital products, and other power electronic products. The method for improving the loading capacity and the compaction density of the electrode pole piece, particularly the loading capacity and the compaction density of the positive electrode sheet, is an effective method for increasing the energy density of the battery. However, with the increase of the loading capacity and the compaction density of the positive electrode sheet, the positive electrode active material layer is thickened and the porosity is reduced, so that the lithium ions are difficult to transmit in the positive electrode sheet, the polarization of the battery is serious, the discharge specific capacity and the rate capability of the battery are reduced, and the cycling stability is also degraded. Meanwhile, when the energy density of the battery is improved, the safety performance of the battery can hardly be ensured. There has not been a technology to solve all the above problems.

The existing methods for improving the rate capability of the battery comprising:
Doping the positive electrode surface: CN113224287A discloses a strontium-doped ternary lithium-ion battery positive electrode material and a preparation method and use thereof (Li₁₋ₓSrₓ[Ni_{1-y-z}Co_{y}M_{z}]O₂, wherein M is one of metal Mn and Al, 0<x≤0.1, 0< y≤1, 0<z≤1),. The lithium sites are replaced by doping strontium metal ions so that the cation mixing degree is reduced, a lithium-ion channel is expanded, a layered structure is stabilized, and the rate capability of the lithium battery is effectively improved. While the method increases the rate capability, it often provides the material with the problem of accelerated attenuation of capacity.

The existing methods for improving the safety performance of the battery comprising:
Coating the positive electrode: CN113809280A discloses a positive electrode material and preparation and use thereof, the positive electrode material with an approximate planar coating effect is prepared by changing a sintering technical means and applying interaction between coating agents. The coverage range of the surface coating layer of the positive electrode material prepared with the method is relatively large, the erosion degree of electrolyte to material particles is remarkably reduced, and the probability of side reaction is effectively reduced, thus the safety performance of the material is improved. The disadvantages are that the method has a complex process and influences the rate capability of the battery.

Use of electrolyte additives: CN113690490A discloses a phosphite lithium-ion battery electrolyte additive, which can effectively prevent the combustion or explosion of an organic solvent, improve the thermal stability of the electrolyte, increase the stability of the positive electrode, and improve the stability and safety of battery circulation. The disadvantages involve impairing the electrical properties of the batteries, such as cycle performance and rate capability.

Coating glue on the diaphragm: CN108963153B discloses a lithium-ion battery separator and a preparation method thereof, the preparation method comprises coating an aqueous ceramic slurry on at least one side surface of the base film layer, then coating a composite adhesive layer coating composed of polyethylene glycol and polymethyl methacrylate on the surface of the aqueous ceramic slurry coating and/or the base film layer. The lithium-ion battery separator prepared by the invention has desirable bonding performance, can prevent short circuit from dislocation of pole pieces, and improves the battery hardness, thereby greatly improving the safety performance of the battery. The disadvantages reside in that the rate capability of the battery is damaged.

The existing methods for simultaneously improving the electrical performance and safety performance of the battery comprising:
CN108365260B discloses a quasi-solid electrolyte prepared from the raw materials including a polymer, a ceramic electrolyte, lithium salt, and an ionic liquid. The ceramic electrolyte is prepared from a principal-phase lithium titanium aluminum phosphate and impurity-phase TiP₂O₇/TiO₂. Preferably, the ceramic electrolyte contains 2-7% of impurity-phase, and the mass ratio of TiP₂O₇ to TiOz is 1.5-2.5: 1. The quasi-solid electrolyte prepared by using the ceramic electrolyte with the impurity-phase content has the optimal comprehensive performance. The impurity-phase with special composition and the content has the lithium storage characteristic so that the transmission performance of lithium ions can be improved, the contact between the principal-phase lithium titanium aluminum phosphate and metal lithium can be reduced, and the interface stability with the metal lithium is improved. However, the electrical performance and safety performance of the positive electrode are not improved in the patent, and the method is incompatible with the mainstream preparation process of the positive electrode sheet of the lithium-ion battery in the existing art, and cannot be suitable for the large-scale use.

CN113707880A relates to a positive pole piece containing solid electrolyte, and a preparation method and use thereof, aiming at improving the rate capability, cycle performance, and safety performance of the battery. Given that the solid electrolyte contained in the positive electrode slurry is beneficial to the transverse and longitudinal transmission and infiltration of the electrolyte in the pole piece, is beneficial to the storage and infiltration of the electrolyte, and is conducive to alleviating the expansion of the pole piece during the circulation process of the battery cell, reducing the pressed and extruded amount of the electrolyte in the expansion process of the pole piece, such that the battery cell still contains rich electrolyte in the pole piece after long-term circulation, the normal transmission of lithium ions is ensured, and thus the cycle performance can be improved. However, as illustrated by the data of the examples, the battery capacity and the safety performance are only slightly improved, and the effect on the improvement of rate capability lacks data support, as can be seen, the purpose of comprehensively improving the electrical performance and safety of battery cannot be fulfilled by adding the conventional solid electrolyte.

As a result, there is still a need to search a method with simple steps and cost advantages, while improving the electrical properties and safety performance of the battery.

### SUMMARY

Aiming at the limitations in the existing art, the present disclosure provides a positive electrode sheet for high-rate, long-cycle, and high-safety lithium battery, preparation method therefor and application thereof. The positive electrode sheet of the present disclosure comprises a positive electrode material layer and a functional layer directly located on the positive electrode material layer.

The material of the functional layer comprises a component 1, the component 1 is at least one selected from the group consisting of Li₁₋ₓ₁Ti₁₋ₓ₁Aₓ₁OPO₄, Li₁₋ₓ₁Ti₁₋ₓ₁Aₓ₁PO₅, Li_{2-y1}Ti_{1-y1}A_{y1}OM1O₄, and Li_{2-y1}Ti_{1-y1}A_{y1}M1O₅, wherein 0≤x1≤0.7, 0≤y1≤1, A is at least one selected from the group consisting of Nb, Ta, and Sb, and M1 is at least one of Si and Ge;

the component 1 is preferably at least one selected from the group consisting of LiTiOPO₄, Li_{0.9}Nb_{0.1}Ti_{0.9}OPO₄, Li_{0.9}Ta_{0.1}Ti_{0.9}OPO₄, Li₂TiOSiO₄, and LiTaOGeO₄.

The material of the functional layer further comprises a component 2, the component 2 is at least one selected from the group consisting of LiM2₂(PO₄)₃, Li₁₊ₓ₂Alₓ₂M2₂₋ₓ₂(PO₄)₃, M2O₂, Li_{16-4y2}M2_{y2}O₈, M2P₂O₇, M3PO₄, M3₂SiO₅, M4₃(PO₄)₂, and M4₂SiO₄, M2 is at least one selected from the group consisting of Ti, Ge, Zr, and Hf, wherein 0<x2<0.6, and M3 and M4 are respectively one selected from the group consisting of Al, Ga, Sc, Y, Ca, Sr, Zn, Si, In, Lu, La, Fe, Cr, and Ge, and 3<y2<4; the component 2 is preferably one selected from the group consisting of InPO₄, LATP, AlPO₄, LAGP, LATP + AlPO₄, LAGP + Al₂SiO₅, InPO₄ + LATP, Al₂SiO₅, TiO₂ + LiTi₂(PO4)₃, TiP₂O₇ + LiGe₂(PO4)₃.

In the material of the functional layer, the form of a mixed component of component 1 and component 2 may be the uniform mixture of the component 1 particles and the component 2 particles, or each primary particle contains a component 1 crystal form and a component 2 crystal form.

The functional layer has a porous structure, the porosity is denoted by p, wherein 20%≤p≤80%, the thickness is denoted by h, wherein 0µm<h≤10µm.

Component 1 has a particle diameter within the range from 10nm to 10µm, preferably component 1 has a particle diameter within the range from 50nm to 1 µm.

Component 2 has a particle diameter within the range from 10nm to 10µm, preferably component 2 has a particle diameter within the range from 50nm to 1 µm.

Preferably, the positive electrode active material particles comprise at least one selected from the group consisting of a lithium cobaltate positive electrode and a modified material thereof, an NCM ternary positive electrode and a modified material thereof, an NCA ternary positive electrode and a modified material thereof, a lithium nickel manganate positive electrode and a modified material thereof, a lithium-rich positive electrode and a modified material thereof, and a lithium iron phosphate positive electrode and a modified material thereof.

The conductive agent is at least one selected from the group consisting of Super-P, KS-6, carbon black, carbon nanofiber, carbon nanotube, acetylene black, or graphene.

The binder is selected from the group consisting of polyvinylidene fluoride, polyvinylidene fluoride-hexafluoropropylene, polytetrafluoroethylene, homopolymers, copolymers, modified compounds of the polymers, or a mixture of the polymers and other polymers or small molecules.

The second object of the present disclosure is to provide a method for preparing a positive electrode sheet for a lithium battery according to the first object, wherein component 1 or a mixed component of component 1 and component 2 forms a functional layer on the surface of the positive electrode material layer by means of coating on the positive electrode surface. The slurry containing component 1 or the mixed component of component 1 and component 2 is coated on the surface of the positive electrode sheet, because the positive electrode sheet has a porous structure, a part of particles of component 1 or the mixed component of the component 1 and the component 2 can penetrate and disperse among the particles of the positive electrode active material, in addition to forming a coating on the surface of the positive electrode sheet through the coating treatment.

Preferably, the method comprising:
Step 1: preparing a positive electrode active layer;
Step 2: blending component 1 or a mixed component of component 1 and component 2 with a solvent uniformly, and grinding into a slurry having a particle diameter within the range from 10nm to 10µm;
Step 3: adding a binder into the slurry obtained in Step 2, and uniformly mixing to prepare a coating slurry;
Step 4: coating the slurry obtained in Step 3 on the positive active layer, and drying to prepare the positive electrode sheet.

Preferably,
in Step 2, the solvent in the slurry is at least one selected from the group consisting of deionized water, ethanol, NMP, alcohol, isopropanol, and acetone.

The mass ratio of the solvent to the positive electrode material is within the range of (2000-10): 100.

in Step 4,
the temperature of the blast drying is within the range of 80-180°C, and the time is from 10 minutes to 9 hours; the temperature of the vacuum drying is within the range of 80-180°C, and the time is within the range of 3-100 hours.

The third object of the present disclosure is to provide a method of using the positive electrode sheet according to the first object of the present disclosure in the lithium battery.

The lithium battery is a liquid-state battery or a solid-state battery.

According to the present disclosure, the rate capability, cycle performance, and safety performance of the battery are improved by coating a functional layer on a surface of the positive electrode sheet through the surface coating mode, wherein the functional layer comprises a component 1 with the particle diameter D50 of 0.01-10µm or a mixed component of the component 1 and the component 2. Component 1 is generally considered in the existing art to be an impurity-phase presented during the process of sintering a solid electrolyte, and the presence of such an impurity-phase will reduce the ionic conductivity of the solid electrolyte, thus it needs to be removed when preparing the solid electrolyte, that is, it is generally considered that such a component cannot be used for the solid electrolyte due to the extremely low ionic conductivity. However, through a large number of experiments, the inventors of the present disclosure have discovered that although the component has low ionic conductivity, which is far smaller than the ionic conductivity about 10⁻⁴ S/cm of the common solid electrolyte, and is further smaller than the ionic conductivity about 10⁻² S/cm of an electrolyte solution, the component 1 cannot directly contribute to the ionic conduction capability after being mixed with the electrolyte solution, but the rate capability, the cycle performance, and the safety performance of the positive electrode can be remarkably improved by adding the component 1 into the positive electrode. Composition 1 is considered to participate in the formation of surface CEI of the positive electrode material due to the specific chemical composition, the composition of the CEI is changed to enable the composition to be more stable, and the rupture of the CEI and the battery polarization and thermal runaway caused by the rupture are avoided, such that the rate capability, the cycle performance, and the safety performance of the positive electrode sheet can be improved in the actual operation of the battery; in addition, the component 2 can inhibit the decomposition of the electrolyte and generate an insulating component on the surface of the positive electrode material, so that the component 2 and the component 1 can perform a synergistic effect when used simultaneously, to construct an advantageous CEI, can simultaneously and comprehensively improve the electrical property and safety performance of the battery. Particularly, when component 1 or the mixed component of component 1 and component 2 forms a coating on the electrode sheet surface, the coating not only separates positive and negative electrodes to prevent a short circuit in the battery but also can improve lithium-ion conduction in the direction parallel to the positive electrode sheet surface and reduce decomposition of the electrolyte on the positive electrode sheet surface by improving the CEI on the positive electrode sheet surface layer, the reason may be that the positive electrode sheet surface is the area which has the most sufficient contact with the electrolyte, the protection of the positive electrode sheet surface can improve the battery performance most effectively and comprehensively. The additive is introduced into the positive electrode in a surface coating mode so that the current mainstream preparation process of the positive electrode sheet, the diaphragm, and the battery is not changed, it is conducive to performing the battery rate capability, and the battery has the advantages of high stability and low costs, thus it is suitable for large-scale use.

Compared with the existing art, the present disclosure has the following advantages and prominent effects:
The particles of component 1 or the mixed component of component 1 and component 2 in the functional layer of the lithium battery positive electrode surface have high chemical stability, and can be added into the positive electrode through a surface coating mode after preparation of the positive electrode sheet, and do not change the mainstream preparation process of the positive electrode sheet, separator, and battery, and are compatible with the mainstream preparation process of the positive electrode sheet of the lithium ion battery, and do not affect the preparation technique of the positive electrode and the battery cell, and have the advantages of high stability and low costs, and are suitable for the large-scale use. In contrast, the methods of doping the positive electrode material or coating the positive electrode surface all need to change the existing positive electrode material preparation technology, both the specific discharge capacity and the rate capability cannot be improved simultaneously.

The component 1 added into the positive electrode sheet of the lithium battery of the invention is different from the existing solid electrolyte, its ion conduction capability is not strong. To improve the electrical properties of the battery, an additive component with high lithium ion conductivity is generally selected in the existing art. However, the inventors have found when the particles of component 1 with low lithium ion conductivity are creatively added into the positive electrode, the rate capability, cycle performance and safety performance of the battery can be significantly enhanced by improving the surface CEI of the positive electrode particles, and the existing technical prejudice is overcome.

The particles of the mixed component of component 1 and component 2, which are simultaneously added into the lithium battery positive electrode sheet, can improve the stability of CEI on the surface of the positive electrode particles, inhibit the oxygen release of the positive electrode, and the reaction with the electrolyte solution during thermal runaway, and suppress the decomposition of the electrolyte, thereby improving the electrical property and safety performance of the battery; it is demonstrated by the experiments that the synergistic effect is better when the component 1 and the component 2 are used simultaneously.

Component 1 or a mixed component of component 1 and component 2 forms the safe coating on the positive electrode sheet surface, so that the positive electrode and the negative electrode can be separated, the effect of improving the safety performance of the battery is achieved, and it is proved in the experiments that the battery with the safe coating does not ignite or explode in a hot box test, the reason is that the safe coating can separate the positive electrode and the negative electrode to prevent short circuit. The safety coating not only separates positive and negative electrodes to prevent a short circuit in the battery, but also can improve lithium-ion conduction in the direction parallel to the positive electrode sheet surface and reduce the decomposition of electrolyte in the positive electrode sheet surface by improving the CEI of the positive electrode sheet surface layer, and decrease decomposition of the electrolyte on the positive electrode surface, the reason may be that the positive electrode sheet surface is the area which has the most sufficient contact with the electrolyte, the protection of the positive electrode sheet surface can improve the battery performance most effectively.

The porosity of the functional layer on the lithium battery positive electrode sheet is specially designed, if the porosity is less than 20%, it is not favorable for the battery rate capability, and if the porosity is more than 80%, it is not beneficial to the battery cycle performance; in addition, the functional layer thickness is specifically designed, if the coating thickness is greater than 10µm, it is detrimental to the rate capability of the battery.

The positive electrode exhibits excellent rate capability, cycle performance, and safety performance.

### BRIEF DESCRIPTION OF THE DRAWINGS

FIG. 1 is a schematic structural view of a lithium battery positive electrode sheet in Example 1;
FIG. 2 is a schematic structural view of a lithium battery positive electrode sheet in Example 2;
FIG. 3 illustrates a schematic view of the heavy object impact test tool of the present disclosure;
FIG. 4 is a schematic structural view of a lithium battery positive electrode sheet in Example 9.

### DETAILED DESCRIPTION

The present disclosure will be described in detail below with reference to the appended drawings and examples, it should be indicated that the following examples merely serve to further illustrate the present disclosure, and should not be construed as limiting the protection scope of the present disclosure, the non-essential improvements and modifications on the present disclosure made by those skilled in the art based on the content thereof still fall into the protection scopes of the present disclosure.

### Example 1

Step 1: an NCM positive electrode active layer was prepared, wherein the mass of an active material was 100 g;
Step 2: the mixed component consisting of 25kg of component 1 LiTiOPO₄ and component 2 Li_{1.4}Al_{0.4}Ti_{1.6}(PO₄)₃ was uniformly blended with 500kg of NMP(N-methyl pyrrolidone), and the mixture was ground into a slurry having a particle diameter D50 of 300 nm; the ratio of component 1 to component 2 was 1: 4.
Step 3: 1kg of PVDF(Polyvinylidene Fluoride) was added into the slurry obtained in Step 2, and uniformly stirred to prepare a coating slurry having a viscosity value of 200mPa·S;
Step 4: the slurry obtained in Step 3 was coated on an NCM90 positive electrode active layer, and dried to obtain a positive electrode sheet, wherein the coating thickness was 1µm, and the porosity was 40%.

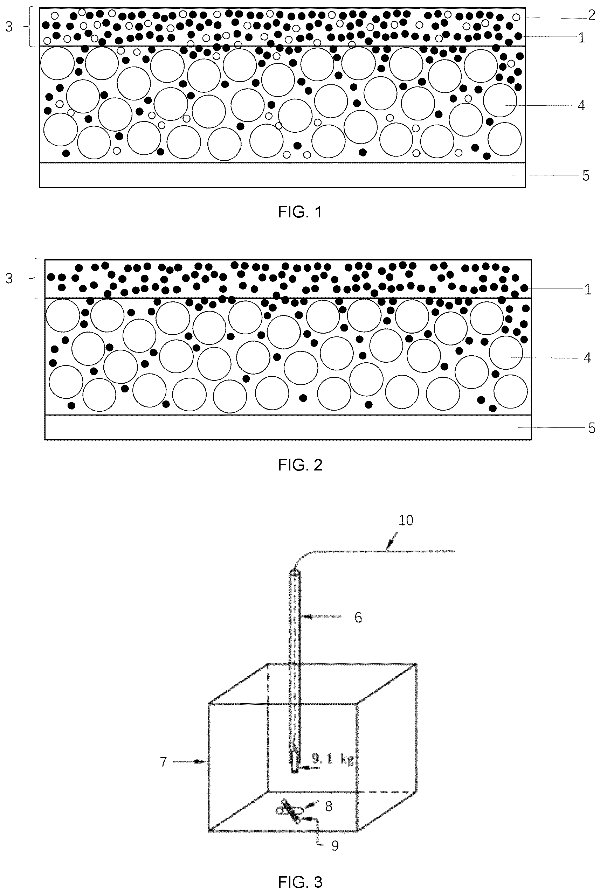

The schematic structural view of the positive electrode sheet for the lithium battery prepared with the above method was shown in FIG. 1, wherein the positive electrode sheet for the lithium battery included a current collector 5, a positive electrode material layer on the current collector 5, and a functional layer 3 directly located on the positive electrode material layer, wherein the positive electrode material layer contained a positive electrode active material 4, a conductive agent, and a binder; the functional layer 3 contained component 1 particles and component 2 particles; the component 1 particle and the component 2 particle in the functional layer 3 were uniformly distributed, and a part of the component 1 particle and the component 2 particle was diffused into the positive electrode material layer and distributed among the particles of the positive electrode active material 4. The positive electrode sheet and the SiOC650 negative electrode were matched and assembled to form a pouch lithium battery, the prepared lithium battery was subjected to the process steps of electrolyte injection, formation, and capacity grading, and then subjected to the electrochemical test and safety performance test. The specific electrochemical performance test results were shown in Table 1, and the safety performance test results were illustrated in Table 2.

The method for the electrochemical performance test of the lithium battery used in the application document comprised the following steps:

### 1. Cycle performance test

a) The battery was charged at a constant current of 1C at a temperature of 23°C±2°C until a charging termination voltage was reached, the charging mode was then transferred to the constant voltage charging until the charging current multiplier was decreased to 0.05C, and the charging was stopped, and the battery was subjected to standing still for 1 h;
b) The battery was discharged at a constant current of 1C until the discharge termination voltage was reached, the discharging was stopped, and the discharge capacity was recorded; so that a cycle of charging and discharging was completed;
c) The steps a) and b) were repeated until the discharge capacity was lower than 80% of the first cycle discharge capacity, and the total cycle number of the battery charging and discharging at the moment was recorded.

### 2. Rate capability test

a) The battery was charged at the multiplier currents of 0.1C, 0.2C, 0.33C, 1C, 2C, and 3C at a temperature of 23°C±2°C respectively until the charging termination voltage was reached, the battery was then discharged at the same multiplier current until the discharge termination voltage was reached, and the battery was subjected to 4 discharging and discharging cycles at the same multiplier current respectively;
b) The discharge capacity conditions with different multiplier currents were recorded;
c) The ratio of the 2C or 3C discharge capacity to the 0.33C discharge capacity was calculated and denoted as 2C/0.33C or 3C/0.33C, the rate capability was evaluated.

### 3. High-temperature cycle

a) The battery was charged at a constant current of 1C at a temperature of 45°C until a charging termination voltage was reached, the charging mode was then transferred to the constant voltage charging until the charging current multiplier was decreased to 0.05C, the charging was stopped;
b) The lithium battery was subjected to standing still at a temperature of 45°C for 5 h;
c) The battery was discharged at a constant current of 1C under the high-temperature condition of 45°C until the discharge termination voltage was reached, the discharging was stopped, and the discharge capacity was recorded; so that a cycle of charging and discharging was completed;
d) The steps a) to c) were repeated until the discharge capacity was lower than 80% of the first cycle discharge capacity, the discharge capacity of the battery, and the total cycle number of the battery charging and discharging at the moment were recorded.

The lithium-ion battery safety performance testing method comprised the following items:

### 1. Overcharge

a) The battery was charged at a constant current of 1C at a temperature of 23°C±2°C until a charging termination voltage was reached, the charging mode was then transferred to the constant voltage charging until the charging current multiplier was decreased to 0.05C, and the charging was stopped, and the battery was subjected to standing still for 1 h;
b) The battery was continuously discharged at a constant current of 1C until the thermal runaway of the battery occurred, the voltage value of the battery when the thermal runaway began to occur was recorded;

### 2. Hotbox

a) The battery was charged at a constant current of 1C at a temperature of 23°C±2°C until a charging termination voltage was reached, the charging mode was then transferred to the constant voltage charging until the charging current multiplier was decreased to 0.05C, and the charging was stopped, and the battery was subjected to standing still for 1 h;
b) The battery was placed in a test chamber. The test chamber was heated at a temperature rise rate of 5°C/min, the temperature was kept constant for 1h after the temperature in the test chamber reached 160°C +/-2°C;

The battery passed through the test if the smoking, outbreak of a fire, or explosion did not occur, otherwise the battery did not pass through the test.

### 3. Falling down

a) The battery was charged at a constant current of 1C at a temperature of 23°C±2°C until a charging termination voltage was reached, the charging mode was then transferred to the constant voltage charging until the charging current multiplier was decreased to 0.05C, and the charging was stopped, and the battery was subjected to standing still for 1 h;
b) The battery was subjected to a free fall on a concrete plate according to a drop height of 1 m;

Each surface of the pouch battery fell once, and a total of six tests were carried out;
After six tests, the battery passed through the test if the smoking, outbreak of a fire, or explosion did not occur, otherwise the battery did not pass through the test.

### 4. Impact of a heavy object

a) The battery was charged at a constant current of 1C at a temperature of 23°C±2°C until a charging termination voltage was reached, the charging mode was then transferred to the constant voltage charging until the charging current multiplier was decreased to 0.05C, and the charging was stopped, and the battery was subjected to standing still for 1 h;
b) Battery 8 was placed on a platform surface, a metal rod 9 with a diameter of 15.8mm±0.2mm was transversely disposed on the upper surface of a geometric center of the battery, the battery surface with the metal rod was impacted by a heavy object with the mass of 9.1kg±0.1kg in a free falling state from a height of 610mm±25mm, and observed for 6h, wherein a schematic view of the heavy object impact test tool was illustrated in FIG. 3, wherein 10 represented a traction rope, 6 represented a guide pipe, and 7 denoted an iron and steel impact box (a hinge door was not shown).

Only the wide surface of the pouch battery was subjected to the impact test, thus each sample was subjected to only one impact test;
The battery passed through the test if the smoking, outbreak of a fire, or explosion did not occur, otherwise the battery did not pass through the test.

### 5. Acupuncture

a) The battery was charged at a constant current of 1C at a temperature of 23°C±2°C until a charging termination voltage was reached, the charging mode was then transferred to the constant voltage charging until the charging current multiplier was decreased to 0.05C, and the charging was stopped, and the battery was subjected to standing still for 1 h;
b) The battery was penetrated by a high-temperature-resistant steel needle having a diameter ϕ of 8mm (the conical angle of the pinpoint was 45°, the surface of the needle was smooth and had no rust, oxide layer, and oil stain) at the speed of 25 mm/s from the direction vertical to a battery polar plate, wherein the penetration position was the geometric center of the penetrated surface, and the steel needle was retained in the storage battery;
c) The battery was observed for 1 h;

The battery passed through the test if the smoking, outbreak of a fire, or explosion did not occur, otherwise the battery did not pass through the test.

### Example 2

The mixed component consisting of 25kg of the component 1 and the component 2 was replaced with the component containing only 25kg of the component 1, without the component 2, the positive electrode active material was replaced with NCM83, the battery structure was NCM83||SiOC650, and the other parameters were the same as those in Example 1; the schematic structural view of the prepared lithium battery positive electrode sheet was shown in FIG. 2, wherein the positive electrode sheet for the lithium battery included a current collector 5, a positive electrode material layer on the current collector 5, and a functional layer 3 directly located on the positive electrode material layer, wherein the positive electrode material layer contained a positive electrode active material 4, a conductive agent, and a binder; the functional layer 3 comprises component 1 particles; the component 1 particles in the functional layer 3 were uniformly distributed, and a part of the component 1 particles was diffused into the positive electrode material layer and distributed among the particles of the positive electrode active material 4. The prepared lithium battery was subjected to the process steps of electrolyte injection, formation, and capacity grading, and then subjected to the electrochemical test and safety performance test. The specific electrochemical performance test results of the lithium battery prepared with the positive electrode sheet were shown in Table 1, and the safety performance test results were illustrated in Table 2.

### Example 3

The component 2 was replaced with AlPO₄, the positive electrode active material was replaced with NCM83, the negative electrode was replaced with SiOC450, the battery structure was NCM83||SiOC450, and other parameters were the same as those in Example 1; the prepared lithium battery was subjected to the process steps of electrolyte injection, formation, and capacity grading, and then subjected to the electrochemical test and safety performance test. The specific electrochemical performance test results of the lithium battery prepared with the positive electrode sheet were shown in Table 1, and the safety performance test results were illustrated in Table 2.

### Example 4

The component 2 was replaced by Li_{1.4}Al_{0.4}Ti_{1.6}(PO₄)₃ and AlPO₄, and the mass ratio of component 1 to Li_{1.4}Al_{0.4}Ti_{1.6}(PO₄)₃ and AlPO₄ in component 2 was 1:8:1, the positive electrode active material was replaced by LCO, the negative electrode was replaced by SiOC450, the battery structure was LCO||SiOC450, and other parameters were the same as those in Example 1; the prepared lithium battery was subjected to the process steps of electrolyte injection, formation, and capacity grading, and then subjected to the electrochemical test and safety performance test. The specific electrochemical performance test results of the lithium battery prepared with the positive electrode sheet were shown in Table 1, and the safety performance test results were illustrated in Table 2.

### Example 5

25kg of the mixed component consisting of component 1 and component 2 was replaced with the component containing only 25kg of component 1 LiTaOSiO₄, without component 2, the positive electrode active material was replaced with LFP, the negative electrode was replaced with graphite, the battery structure was LFPllgraphite, and the other parameters were the same as those in Example 1; the prepared lithium battery was subjected to the process steps of electrolyte injection, formation, and capacity grading, and then subjected to the electrochemical test and safety performance test. The specific electrochemical performance test results of the lithium battery prepared with the positive electrode sheet were shown in Table 1, and the safety performance test results were illustrated in Table 2.

### Example 6

The component 1 was replaced with LiTaOGeO₄, the component 2 was replaced with Li_{1.4}Al_{0.4}Ge_{1.6}(PO₄)₃, the positive electrode active material was replaced with NCM83, the negative electrode was replaced with graphite, the battery structure was NCM83||graphite, and the other parameters were the same as those in Example 1; the prepared lithium battery was subjected to the process steps of electrolyte injection, formation, and capacity grading, and then subjected to the electrochemical test and safety performance test. The specific electrochemical performance test results of the lithium battery prepared with the positive electrode sheet were shown in Table 1, and the safety performance test results were illustrated in Table 2.

### Example 7

The component 2 was replaced by Li_{1.4}Al_{0.4}Ti_{1.6}(PO₄)₃ and AlPO₄, the mass ratio of component 1 to Li_{1.4}Al_{0.4}Ti_{1.6}(PO₄)₃ and AlPO₄ in component 2 was 1:8:1, the porosity was replaced by 80%, and other parameters were the same as those in Example 1; the prepared lithium battery was subjected to the process steps of electrolyte injection, formation, and capacity grading, and then subjected to the electrochemical test and safety performance test. The specific electrochemical performance test results of the lithium battery prepared with the positive electrode sheet were shown in Table 1, and the safety performance test results were illustrated in Table 2.

### Example 8

The component 2 was replaced by Li_{1.4}Al_{0.4}Ti_{1.6}(PO₄)₃ and AlPO₄, the mass ratio of component 1 to Li_{1.4}Al_{0.4}Ti_{1.6}(PO₄)₃ and AlPO₄ in component 2 was 1:8:1, the porosity was replaced by 20%, and other parameters were the same as those in Example 1; the prepared lithium battery was subjected to the process steps of electrolyte injection, formation, and capacity grading, and then subjected to the electrochemical test and safety performance test. The specific electrochemical performance test results of the lithium battery prepared with the positive electrode sheet were shown in Table 1, and the safety performance test results were illustrated in Table 2.

### Example 9

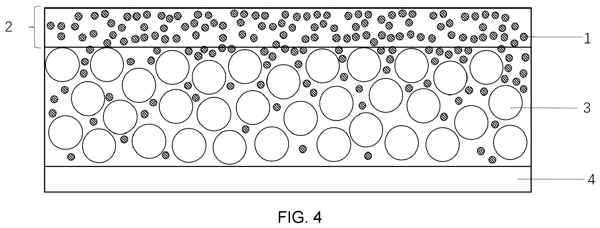

The component 2 was replaced by Li_{1.4}Al_{0.4}Ti_{1.6}(PO₄)₃ and AlPO₄, the mass ratio of component 1 to Li_{1.4}Al_{0.4}Ti_{1.6}(PO₄)₃ and AlPO₄ in component 2 was 1:8:1, the coating thickness was replaced by 500nm, each primary particle of the mixed component included the particles of a first component crystal form and a second component crystal form, the particle diameter D50 of the primary particles in the mixed component was 300nm, and the form of the mixed component consisting of component 1 and the component 2 was shown in FIG. 4, wherein 1 represented the mixed component of component 1 and component 2 in a particle, 2 represented the coating, 3 represented the active material, 4 represented the current collector, and other parameters were the same as those in Example 1; the prepared lithium battery was subjected to the process steps of electrolyte injection, formation, and capacity grading, and then subjected to the electrochemical test and safety performance test. The specific electrochemical performance test results of the lithium battery prepared with the positive electrode sheet were shown in Table 1, and the safety performance test results were illustrated in Table 2.

### Example 10

The component 2 was replaced by Li_{1.4}Al_{0.4}Ti_{1.6}(PO₄)₃ and AlPO₄, the mass ratio of component 1 to Li_{1.4}Al_{0.4}Ti_{1.6}(PO₄)₃ and AlPO₄ in component 2 was 1:8:1, the coating thickness was replaced by 10µm, and other parameters were the same as those in Example 1; the prepared lithium battery was subjected to the process steps of electrolyte injection, formation, and capacity grading, and then subjected to the electrochemical test and safety performance test. The specific electrochemical performance test results of the lithium battery prepared with the positive electrode sheet were shown in Table 1, and the safety performance test results were illustrated in Table 2.

### Example 11

The component 2 was replaced by Li_{1.4}Al_{0.4}Ti_{1.6}(PO₄)₃ and AlPO₄, the mass ratio of component 1 to Li_{1.4}Al_{0.4}Ti_{1.6}(PO₄)₃ and AlPO₄ in component 2 was 1:8:1, the porosity was replaced by 20%, the particle diameter D50 of the mixed component consisting of component 1 and the component 2 was 50nm, and other parameters were the same as those in Example 9; the prepared lithium battery was subjected to the process steps of electrolyte injection, formation, and capacity grading, and then subjected to the electrochemical test and safety performance test. The specific electrochemical performance test results of the lithium battery prepared with the positive electrode sheet were shown in Table 1, and the safety performance test results were illustrated in Table 2.

### Example 12

The component 2 was replaced by Li_{1.4}Al_{0.4}Ti_{1.6}(PO₄)₃ and AlPO₄, the mass ratio of component 1 to Li_{1.4}Al_{0.4}Ti_{1.6}(PO₄)₃ and AlPO₄ in component 2 was 1:8:1, the particle diameter D50 of the mixed component consisting of component 1 and component 2 was replaced with 1µm, and other parameters were the same as those in Example 9; the prepared lithium battery was subjected to the process steps of electrolyte injection, formation, and capacity grading, and then subjected to the electrochemical test and safety performance test. The specific electrochemical performance test results of the lithium battery prepared with the positive electrode sheet were shown in Table 1, and the safety performance test results were illustrated in Table 2.

### Example 13

The component 2 was replaced by Li_{1.4}Al_{0.4}Ti_{1.6}(PO₄)₃ and AlPO₄, the mass ratio of component 1 to Li_{1.4}Al_{0.4}Ti_{1.6}(PO₄)₃ and AlPO₄ in component 2 was 1:8:1, the particle diameter D50 of the mixed component consisting of component 1 and the component 2 was replaced with 50nm, the coating thickness was replaced with 10nm, and other parameters were the same as those in Example 9; the prepared lithium battery was subjected to the process steps of electrolyte injection, formation, and capacity grading, and then subjected to the electrochemical test and safety performance test. The specific electrochemical performance test results of the lithium battery prepared with the positive electrode sheet were shown in Table 1, and the safety performance test results were illustrated in Table 2.

### Comparative Example 1

The component 1 and component 2 were not used, and other parameters were the same as those in Example 1; the prepared lithium battery was subjected to the process steps of electrolyte injection, formation, and capacity grading, and then subjected to the electrochemical test and safety performance test. The specific electrochemical performance test results of the lithium battery prepared with the positive electrode sheet were shown in Table 1, and the safety performance test results were illustrated in Table 2.

### Comparative Example 2

The component 1 and the component 2 were not used, the positive electrode active material was replaced with NCM83, the battery structure was NCM83||SiOC650, and other parameters were the same as those in Example 1; the prepared lithium battery was subjected to the process steps of electrolyte injection, formation, and capacity grading, and then subjected to the electrochemical test and safety performance test. The specific electrochemical performance test results of the lithium battery prepared with the positive electrode sheet were shown in Table 1, and the safety performance test results were illustrated in Table 2.

### Comparative Example 3

The component 1 and component 2 were not used, the positive electrode active material was replaced with NCM83, the negative electrode was SiOC450, the battery structure was NCM83||SiOC450, and other parameters were the same as those in Example 1; the prepared lithium battery was subjected to the process steps of electrolyte injection, formation, and capacity grading, and then subjected to the electrochemical test and safety performance test. The specific electrochemical performance test results of the lithium battery prepared with the positive electrode sheet were shown in Table 1, and the safety performance test results were illustrated in Table 2.

### Comparative Example 4

The component 1 and component 2 were not used, the positive electrode active material was replaced with LCO, the negative electrode was SiOC450, the battery structure was LCO||SiOC450, and other parameters were the same as those in Example 1; the prepared lithium battery was subjected to the process steps of electrolyte injection, formation, and capacity grading, and then subjected to the electrochemical test and safety performance test. The specific electrochemical performance test results of the lithium battery prepared with the positive electrode sheet were shown in Table 1, and the safety performance test results were illustrated in Table 2.

### Comparative Example 5

The component 1 and the component 2 were not used, the positive electrode active material was replaced with LFP, the negative electrode was graphite, the battery structure was LFPllgraphite, and other parameters were the same as those in Example 1; the prepared lithium battery was subjected to the process steps of electrolyte injection, formation, and capacity grading, and then subjected to the electrochemical test and safety performance test. The specific electrochemical performance test results of the lithium battery prepared with the positive electrode sheet were shown in Table 1, and the safety performance test results were illustrated in Table 2.

### Comparative Example 6

The component 1 and component 2 were not used, the positive electrode active material was replaced with NCM83, the negative electrode was graphite, the battery structure was NCM83||graphite, and other parameters were the same as those in Example 1; the prepared lithium battery was subjected to the process steps of electrolyte injection, formation, and capacity grading, and then subjected to the electrochemical test and safety performance test. The specific electrochemical performance test results of the lithium battery prepared with the positive electrode sheet were shown in Table 1, and the safety performance test results were illustrated in Table 2.

### Comparative Example 7

25kg of the mixed component consisting of component 1 and component 2 was replaced with 25kg of Al₂O₃, and other parameters were the same as those in Example 1; the prepared lithium battery was subjected to the process steps of electrolyte injection, formation, and capacity grading, and then subjected to the electrochemical test and safety performance test. The specific electrochemical performance test results of the lithium battery prepared with the positive electrode sheet were shown in Table 1, and the safety performance test results were illustrated in Table 2.

### Comparative Example 8

25kg of the mixed component consisting of component 1 and component 2 was replaced with 25kg of ZnO, the positive electrode active material was replaced with NCM83, the battery structure was NCM83||SiOC650, and other parameters were the same as those in Example 1; the prepared lithium battery was subjected to the process steps of electrolyte injection, formation, and capacity grading, and then subjected to the electrochemical test and safety performance test. The specific electrochemical performance test results of the lithium battery prepared with the positive electrode sheet were shown in Table 1, and the safety performance test results were illustrated in Table 2.

### Comparative Example 9

25kg of the mixed component consisting of component 1 and component 2 was replaced with 25kg of Li_{1.4}Al_{0.4}Ti_{1.6}(PO₄)₃, the positive electrode active material was replaced with NCM83, the negative electrode was replaced with SiOC450, the battery structure was NCM83||SiOC450, and other parameters were the same as those in Example 1; the prepared lithium battery was subjected to the process steps of electrolyte injection, formation, and capacity grading, and then subjected to the electrochemical test and safety performance test. The specific electrochemical performance test results of the lithium battery prepared with the positive electrode sheet were shown in Table 1, and the safety performance test results were illustrated in Table 2.

### Comparative Example 10

25kg of the mixed component consisting of component 1 and component 2 was replaced with 25kg of AlPO₄, the positive electrode active material was replaced with LCO, the negative electrode was replaced with SiOC450, the battery structure was LCO||SiOC450, and other parameters were the same as those in Example 1; the prepared lithium battery was subjected to the process steps of electrolyte injection, formation, and capacity grading, and then subjected to the electrochemical test and safety performance test. The specific electrochemical performance test results of the lithium battery prepared with the positive electrode sheet were shown in Table 1, and the safety performance test results were illustrated in Table 2.

### Comparative Example 11

25kg of the mixed component consisting of component 1 and component 2 was replaced with 25kg of Li_{0.5}La_{0.5}TiO₃, the positive electrode active substance was replaced with LFP, the negative electrode was replaced with graphite, the battery structure was LFP||graphite, and other parameters were the same as those in Example 1; the prepared lithium battery was subjected to the process steps of electrolyte injection, formation, and capacity grading, and then subjected to the electrochemical test and safety performance test. The specific electrochemical performance test results of the lithium battery prepared with the positive electrode sheet were shown in Table 1, and the safety performance test results were illustrated in Table 2.

### Comparative Example 12

25kg of the mixed component consisting of component 1 and component 2 was replaced with 25kg of Li₇La₃Zr₂O₁₂, the positive electrode active material was replaced with NCM83, the negative electrode was replaced with graphite, the battery structure was NCM83||graphite, and other parameters were the same as those in Example 1; the prepared lithium battery was subjected to the process steps of electrolyte injection, formation, and capacity grading, and then subjected to the electrochemical test and safety performance test. The specific electrochemical performance test results of the lithium battery prepared with the positive electrode sheet were shown in Table 1, and the safety performance test results were illustrated in Table 2.

The electrochemical performance data for the Examples and Comparative Examples were shown in Table 1.

**Table 1**

| | Battery capacity | Battery energy density | Cycles at room temperature (80%) | Multiplying power at room temperature | Cycles at 45°C (80%) |
|---|---|---|---|---|---|
| Example 1 | 100Ah | 365Wh/kg | 1401 | 2C/0.33C=75% | 994 |
| Example 2 | 80Ah | 330Wh/kg | 1497 | 3C/0.33C=85% | 1054 |
| Example 3 | 100Ah | 310Wh/kg | 1879 | 3C/0.33C=87% | 1399 |
| Example 4 | 30Ah | 290Wh/kg | 2401 | 3C/0.33C=89% | 1651 |
| Example 5 | 50Ah | 155Wh/kg | 8677 | 3C/0.33C=96% | 5700 |
| Example 6 | 78Ah | 280Wh/kg | 3201 | 3C/0.33C=88% | 2153 |
| Example 7 | 100Ah | 365Wh/kg | 1275 | 2C/0.33C=72% | 800 |
| Example 8 | 100Ah | 365Wh/kg | 1392 | 2C/0.33C=70% | 913 |
| Example 9 | 100Ah | 365Wh/kg | 1364 | 2C/0.33C=73% | 854 |
| Example 10 | 100Ah | 340Wh/kg | 1354 | 2C/0.33C=69% | 907 |
| Example 11 | 100Ah | 365Wh/kg | 1369 | 2C/0.33C=69% | 927 |
| Example 12 | 100Ah | 365Wh/kg | 1245 | 2C/0.33C=69% | 903 |
| Example 13 | 100Ah | 365Wh/kg | 1264 | 2C/0.33C=73% | 754 |
| Comparative Example 1 | 10Ah | 365Wh/kg | 714 | 2C/0.33C=58% | 428 |
| Comparative Example 2 | 80Ah | 330Wh/kg | 1021 | 3C/0.33C=78% | 675 |
| Comparative Example 3 | 100Ah | 310Wh/kg | 1225 | 3C/0.33C=80% | 817 |
| Comparative Example 4 | 30Ah | 290Wh/kg | 1612 | 3C/0.33C=83% | 1081 |
| Comparative Example 5 | 50Ah | 155Wh/kg | 5795 | 3C/0.33C=92% | 3804 |
| Comparative Example 6 | 78Ah | 280Wh/kg | 2146 | 3C/0.33C=82% | 1455 |
| Comparative Example 7 | 10Ah | 360Wh/kg | 801 | 2C/0.33C=60% | 501 |
| Comparative Example 8 | 80Ah | 325Wh/kg | 994 | 3C/0.33C=78% | 712 |
| Comparative Example 9 | 100Ah | 308Wh/kg | 1245 | 3C/0.33C=81% | 833 |
| Comparative Example 10 | 30Ah | 286Wh/kg | 1779 | 3C/0.33C=83% | 1145 |
| Comparative Example 11 | 50Ah | 155Wh/kg | 5877 | 3C/0.33C=93% | 3989 |
| Comparative Example 12 | 78Ah | 280Wh/kg | 2201 | 3C/0.33C=83% | 1544 |

The safety performance data for the Examples and Comparative Examples were shown in Table 2.

**Table 2**

| | The pass rate of hot box | The pass rate of a heavy object impact | The pass rate of falling down | The pass rate of acupuncture | Overcharge voltage |
|---|---|---|---|---|---|
| Example 1 | 3/5 | 3/5 | 5/5 | 3/5 | 5.6V |
| Example 2 | 3/5 | 3/5 | 5/5 | 3/5 | 5.8V |
| Example 3 | 4/5 | 4/5 | 5/5 | 4/5 | 5.9V |
| Example 4 | 4/5 | 4/5 | 5/5 | 5/5 | 7.4V |
| Example 5 | 5/5 | 5/5 | 5/5 | 5/5 | 32V |
| Example 6 | 4/5 | 5/5 | 5/5 | 4/5 | 7.7V |
| Example 7 | 3/5 | 3/5 | 5/5 | 3/5 | 5.6V |
| Example 8 | 3/5 | 3/5 | 5/5 | 3/5 | 5.5V |
| Example 9 | 1/5 | 3/5 | 5/5 | 3/5 | 5.4V |
| Example 10 | 3/5 | 4/5 | 5/5 | 3/5 | 5.4V |
| Example 11 | 3/5 | 3/5 | 5/5 | 3/5 | 5.4V |
| Example 12 | 1/5 | 3/5 | 5/5 | 3/5 | 5.4V |
| Example 13 | 1/5 | 3/5 | 5/5 | 3/5 | 5.4V |
| Comparative Example 1 | 0/5 | 0/5 | 0/5 | 0/5 | 4.5V |
| Comparative Example 2 | 0/5 | 0/5 | 0/5 | 0/5 | 4.6V |
| Comparative Example 3 | 1/5 | 0/5 | 0/5 | 0/5 | 4.7V |
| Comparative Example 4 | 2/5 | 0/5 | 2/5 | 2/5 | 5.5V |
| Comparative Example 5 | 2/5 | 1/5 | 4/5 | 4/5 | 18V |
| Comparative Example 6 | 2/5 | 0/5 | 1/5 | 1/5 | 6.0V |
| Comparative Example 7 | 1/5 | 0/5 | 0/5 | 0/5 | 4.7V |
| Comparative Example 8 | 1/5 | 0/5 | 0/5 | 0/5 | 4.8V |
| Comparative Example 9 | 2/5 | 0/5 | 0/5 | 0/5 | 4.8V |
| Comparative Example 10 | 2/5 | 1/5 | 3/5 | 2/5 | 5.8V |
| Comparative Example 11 | 3/5 | 2/5 | 4/5 | 4/5 | 19V |
| Comparative Example 12 | 2/5 | 1/5 | 2/5 | 1/5 | 6.3V |

As can be seen from the data in Table 1 and Table 2, the rate capability, cycle performance, and safety performance of the battery can be significantly improved by coating a functional layer comprising component 1 or the mixed component of component 1 and component 2 on the positive electrode surface. It is illustrated by a comparison of Example 5 and Comparative Example 11, the effect of improving the rate capability, cycle performance, and safety performance of the battery by coating component 1 on the positive electrode is much stronger than coating the solid electrolyte having a high lithium ion conduction on the positive electrode, the reason resides in that constructing a high-efficiency CEI is vital for improving the electrical properties and safety performance of the liquid state battery and the solid battery. It is indicated from the comparison between Example 1 and Examples 7 and 8 that the porosity of the functional layer on the lithium battery positive electrode sheet of the present disclosure has an optimal design, if the porosity is too small, it is not beneficial to the battery rate capability, and if the porosity is too large, it is conducive for exertion of the battery cycle performance. The comparison results between Example 1 and Examples 9, 10, and 13 demonstrate that the functional layer has an optimum thickness, if the thickness of the functional layer is too small, it is disadvantageous for the exertion of safety performance, if the thickness of the functional layer is too large, it is not beneficial to performance of the rate capability. The comparison results between Example 1 and Examples 11 and 12 show that there are the optimal particle diameters of component 1 and component 2, the optimization of the particle diameters can improve the electrical property and safety performance of the battery; if the particle diameter is too small, the additive particles are prone to agglomerate to affect the rate capability; if the particle diameter is too large, the additive particles lack the sufficient contact with the surface of the active material particles, thus the rate capability and safety performance are especially influenced; the excessively large or small particle diameter is not favorable for the construction of stable CEI.

## Claims

1. A lithium battery positive electrode sheet comprising a positive electrode material layer and a functional layer directly located on the positive electrode material layer,
wherein the material of the functional layer comprises a component 1, the component 1 is at least one selected from the group consisting of Li₁₋ₓ₁Ti₁₋ₓ₁Aₓ₁OPO₄, Li₁₋ₓ₁Ti₁₋ₓ₁Aₓ₁PO₅, Li_{2-y1}Ti_{1-y1}A_{y1}OM1O₄, and Li_{2-y1}Ti_{1-y1}A_{y1}M1O₅, wherein 0≤x1≤0.7, 0≤y1≤1, A is at least one selected from the group consisting of Nb, Ta, and Sb, and M1 is at least one of Si and Ge;
the component 1 is preferably at least one selected from the group consisting of LiTiOPO₄, Li_{0.9}Nb_{0.1}Ti_{0.9}OPO₄, Li_{0.9}Ta_{0.1}Ti_{0.9}OPO₄, Li₂TiOSiO₄, and LiTaOGeO₄.

2. The lithium battery positive electrode sheet of claim 1, wherein the material of the functional layer further comprises a component 2, the component 2 is at least one selected from the group consisting of LiM2₂(PO₄)₃, Li₁₊ₓ₂Alₓ₂M2₂₋ₓ₂(PO₄)₃, M2O₂, Li_{16-4y2}M2_{y2}O₈, M2P₂O₇, M3PO₄, M3₂SiO₅, M4₃(PO₄)₂, and M4₂SiO₄, M2 is selected from one of Ti, Ge, Zr, and Hf, wherein 0<x2<0.6, and M3 and M4 are respectively one selected from the group consisting of Al, Ga, Sc, Y, Ca, Sr, Zn, Si, In, Lu, La, Fe, Cr, and Ge, and 3<y2<4;
the component 2 is preferably one selected from the group consisting of InPO₄, LATP, AlPO₄, LAGP, LATP + AlPO₄, LAGP + Al₂SiO₅, InPO₄ + LATP, Al₂SiO₅, TiO₂ + LiTi₂(PO4)₃, TiP₂O₇ + LiGe₂(PO4)₃.

3. The lithium battery positive electrode sheet of claim 1, wherein in the material of the functional layer, the mixed component of component 1 and component 2 may be the uniform mixture of the component 1 particle and component 2 particle, or each primary particle contains component 1 crystal form and component 2 crystal form.

4. The lithium battery positive electrode sheet of claim 1, wherein the functional layer has a three-dimensional porous structure, the porosity is denoted by p, wherein 20%≤p≤80%, the thickness is denoted by h, wherein 0µm<h≤10µm.

5. The lithium battery positive electrode sheet of claim 1, wherein the component 1 in the functional layer has a particle diameter within the range from 10nm to 10µm, preferably from 50nm to 1µm.

6. The lithium battery positive electrode sheet of claim 2, wherein the component 2 in the functional layer has a particle diameter within the range from 10nm to 10µm, preferably from 50nm to 1µm.

7. The lithium battery positive electrode sheet of claim 1, wherein the positive electrode active material comprises at least one selected from the group consisting of a lithium cobaltate positive electrode and a modified material thereof, an NCM ternary positive electrode and a modified material thereof, an NCA ternary positive electrode and a modified material thereof, a lithium nickel manganate positive electrode and a modified material thereof, a lithium-rich positive electrode and a modified material thereof, and a lithium iron phosphate positive electrode and a modified material thereof.

8. A method for preparing the lithium battery positive electrode sheet of any one of claims 1-6, wherein the method comprising:
Step 1: preparing a positive electrode active layer;
Step 2: blending component 1 or a mixed component of component 1 and component 2 with a solvent uniformly, and grinding into a slurry having a particle diameter within the range from 10nm to 10µm;
Step 3: adding a binder into the slurry obtained in Step 2, and uniformly mixing to prepare a coating slurry;
Step 4: coating the slurry obtained in Step 3 on the positive active layer, and drying to prepare the positive electrode sheet.

9. The method of claim 7, wherein the solvent comprises at least one selected from the group consisting of deionized water, ethanol, NMP, alcohol, isopropanol, and acetone.

10. A lithium battery cell, wherein the lithium battery cell comprises a positive electrode sheet, a negative electrode sheet, a diaphragm, an electrolyte, and a shell, wherein the positive electrode sheet is the positive electrode sheet of any one of claims 1-7.

11. The lithium battery cell of claim 9, wherein the lithium battery is a liquid-state battery or a solid-state battery.
